# EUROPÄISCHE PATENTSCHRIFT

(11) **EP 2 735 818 B1**
(45) Veröffentlichungstag und Bekanntmachung des Hinweises auf die Patenterteilung: **01.07.2015**
(21) Anmeldenummer: 12193858.3
(22) Anmeldetag: 22.11.2012
(51) Int. Cl.: F24J 3/08

(54) **Verfahren zur Herstellung von U-förmigen Erdwärmesonden**
Method for the preparation of U-shaped geothermal energy probes
Procédé de fabrication de sondes géothermiques en forme de U

(43) Veröffentlichungstag der Anmeldung: 28.05.2014
(73) Patentinhaber: MKM Mansfelder Kupfer und Messing GmbH, 06333 Hettstedt (DE)
(72) Erfinder: Hohmann, Dpl.-Ing., Carsten, 06456 Sandersleben (DE); Kiefuß, Ramon, 06449 Aschersleben/Drohndorf (DE); Göderitz, René, 06311 Helbra (DE)
(74) Vertreter: Tragsdorf, Bodo

(56) Entgegenhaltungen:
- WO-A1-2006/100014
- DE-U1- 20 120 401
- DE-U1-202008 012 453

## Beschreibung

Die Erfindung bezieht sich auf ein Verfahren zur Herstellung von U-förmigen Erdwärmesonden aus aufwickelbarem kunststoffummanteltem Kupferrohr.

Erdwärmesonden bestehen aus einer Rohrleitung die dazu dient, die im Erdboden vorhandene Wärme auf das in der Rohrleitung befindliche Wärmeträgermedium zu übertragen. Dabei wird ausgenutzt, dass im Erdboden ab etwa 10 m Tiefe eine konstante bzw. etwa mit 1 K pro 30 m Tiefe ansteigende Temperatur herrscht.

Ist das Wärmeträgermedium kälter als die herrschende Bodentemperatur, so nimmt es Wärme aus dem Boden auf. Je besser die Wärmeleitfähigkeit der Rohrwandung, umso schneller wird die Wärme übertragen.

Zur Nutzung von Erdwärme ist es erforderlich das Bohrloch lotrecht in den Boden einzubringen.

Die Bohrtiefe sollte mindestens 100 m betragen und reicht bis zu Tiefen von ca. 400 m. Die genaue Tiefe des Bohrloches hängt von den örtlichen Verhältnissen (Bodenhorizonte), dem Wärmebedarf und der Art der Erdwärmesonde ab.

U-förmige Erdwärmesonden bestehen aus zwei parallel geführten Rohrleitungen, z.B. aus Metall oder Kunststoff, die an einem Ende durch einen U-förmigen Rohrbogen, ein sogenannter Fuß, miteinander verbunden sind. Dieser Fuß der Erdwärmesonde wird in das Bohrloch bis zum Grund eingeführt. Das Bohrloch wird anschließend mit einem Dichtungsmittel verfüllt.

Die oberen Rohrleitungsenden werden an den Wärmetauscher einer Wärmepumpe angeschlossen. Der Wärmeträger wird z.B. von einer Pumpe (Vorlauf) zur Erdwärmesonde transportiert, durchströmt die Sonde und kehrt über die Rücklaufleitung zum Wärmetauscher zurück.

Gemäß einer anderen Ausführung der Erdwärmesonde ist diese direkt als Verdampfer an der Wärmepumpe angeschlossen. Der Wärmeträger bzw. das Kältemittel gelangt flüssig in die zuführende Rohrleitung, verdampft auf dem Wege in das Erdreich und gelangt als Dampf in der abführenden Rohrleitung wieder zur Wärmepumpe zurück.

Zur Herstellung derartiger Erdwärmesonden aus PE-ummanteltem Kupferrohr ist es aus der Praxis bekannt, (siehe dazu beispielsweise die Gebrauchsmusterschrift DE 201 20 401 U1) das auf einer Trommel in doppelter Montagelänge aufgewickelte Rohr bis zur Hälfte der Länge abzuwickeln, an dieser Stelle die Rohrleitung in die U-Form zu biegen und anschließend beide Rohrleitungen wieder auf die Trommel aufzuwickeln, derart, dass die U-Form am Ende frei liegt. Nach der Konfektionierung der U-Form mit einem Schutzschlauch wird das Coil zur Baustelle transportiert und die Erdwärmesonde in das vorbereitete Bohrloch eingeführt.

Beim Biegen der U-Form wird der PE-Mantel gereckt und gestaucht, wodurch die Gefahr besteht, dass sich zu einem späteren Zeitpunkt Risse bilden können, die zu thermischen Schädigungen des verlegten Rohres führen.

Da die Sonde aus einem Rohr besteht, ist dieses hinsichtlich Wanddicke und Durchmesser entsprechend materialintensiv auszulegen, um während der Einführung in das Bohrloch Beschädigungen am U-förmigen Abschnitt zu vermeiden und die hinsichtlich der Strömungsgeschwindigkeit gestellten Anforderungen zu erfüllen.

Der Erfindung liegt die Aufgabe zugrunde, ein Verfahren zur Herstellung von U-förmigen Erdwärmesonden aus aufwickelbarem kunststoffummanteltem Kupferrohr zu schaffen, das zu erheblichen Einsparungen an Material und Kosten sowie verbesserten anwendungstechnischen Eigenschaften der Sonde führt.

Erfindungsgemäß wird die Aufgabe durch die im Anspruch 1 angegebenen Merkmale gelöst. Vorteilhafte Weiterbildungen sind Gegenstand der Ansprüche 2 bis 7.

Gemäß der vorgeschlagenen Verfahrensweise werden zwei kunststoffummantelte Kupferohrrohre in entsprechend vorgegebener Montagelänge synchron auf eine Trommel aufgewickelt.

Die Länge der Rohre entspricht in etwa der Tiefe des Bohrloches zum Einbringen der Sonde. Die Herstellung der Erdwärmesonden erfolgt vorzugsweise unmittelbar beim Hersteller der Kupferrohre.

Zuerst werden die beiden freien Enden der auf der Trommel aufgewickelten Kupferrohre abisoliert, beispielsweise ca. 2 cm, sodass zwei blanke Kupferrohrendabschnitte vorliegen.

Danach wird ein separat hergestelltes U-förmiges Formstück aus blankem Kupfer mit einer um mindestens 20 % größeren Wanddicke und einem um mindestens 10 % größeren Außendurchmesser auf die beiden blanken Kupferrohrendabschnitte geschoben, fixiert und druckdicht mit den Kupferrohrendabschnitten verbunden.

Aufgrund der unterschiedlichen Strömungsquerschnitte verringert sich die Strömungsgeschwindigkeit im U-förmigen Bogen und dadurch der strömungsbedingte Verschleiß. Geeignete Verbindungsverfahren sind z.B. Schweißen, Löten oder Crimpen. Die Verbindungstechnik ist so auszuwählen, dass beim nachfolgenden Ummantelungsprozess unter Wärmeeinwirkung die mediendichte Verbindung erhalten bleibt.

Im nächsten Verfahrensschritt wird der U-förmige Rohrsondenabschnitt in ein mehrteiliges Formwerkzeug eingelegt und derart positioniert, dass der kunststoffummantelte Abschnitt an den beiden Rohrenden mit in den Formhohlraum des Werkzeuges ragt, mit einem Überstand, der mindestens dem Rohraußendurchmesser entspricht.

Falls erforderlich werden hierzu die Rohrleitungen mit dem U-förmigen Bogen ein Stück von der Trommel abgewickelt.

Anschließend wird in das Formwerkzeug eine Kunststoffschmelze eingetragen oder eingespritzt und der U-förmige Rohrsondenabschnitt vollständig umhüllt. Dabei wird zwischen den in den Formhohlraum ragenden kunststoffummantelten Rohrabschnitten und der zugeführten Schmelze eine stoffschlüssige Verbindung hergestellt. Diese ist für eine lange Lebensdauer der Erdwärmesonde wichtig.

Nach erfolgter Abkühlung wird das Formwerkzeug geöffnet, die ummantelte Erdwärmesonde entformt und das restliche Ende wieder auf die Trommel aufgewickelt.

Die vorgeschlagene Verfahrensweise ermöglicht eine Verringerung der Querschnitte der Rohrleitungen der Erdwärmesonde. Dies führt nicht nur zur Einsparung an Kupfermaterial sondern auch an Wärmeträgermittel.

Im Vergleich zu herkömmlichen Rohrleitungen für Erdwärmesonden können nunmehr Rohre mit einem um bis zu 50 % geringeren Durchmesser eingesetzt werden.

Der geringere Materialeinsatz für Erdwärmesonden führt zu erheblichen Kosteneinsparungen. Die Wanddicken der Kupferrohrleitungen müssen in ihren Wanddicken nur noch so bemessen sein, dass diese dem herrschenden Innendruck standhalten.

Je geringer die Wanddicke der ummantelten Kupferrohre, desto wirksamer ist Wärmeübertragung.

Ein weiterer Vorteil ist, dass die ummantelten Kupferrohre zur Herstellung der Erdwärmesonde nur einmal auf eine Trommel aufgewickelt werden müssen. Da die zwei Rohre parallel und synchron aufgewickelt werden, entstehen beim Abwickeln vor Ort auf der Baustelle keine Probleme.

Aufgrund der stoffschlüssigen Verbindung zwischen der Ummantelung des U-förmigen Rohrbogens und der angrenzenden Ummantelung der Kupferrohre wird eine hohe Dichtheit im Bereich der Verbindungsstellen zwischen den Rohren und dem U-förmigen Bogen gewährleistet.

Es ist daher von Vorteil, wenn die in das Formwerkzeug eingetragene Schmelze aus dem gleichen Kunststoffmaterial wie die Ummantelung des Kupferrohres besteht.

Die Umhüllung des Rohrsondenabschnittes kann auch so ausgeführt werden, dass ein massiver Kunststoffblock als sogenannter Sondenfuß gebildet wird.

Die Kunststoffummantelung auf dem Medium abführenden Kupferrohr kann einen höheren Wärmewiderstand aufweisen als die Kunststoffummantelung auf dem Medium zuführenden Kupferrohr.

Der U-förmige Bogen kann aus einem Kupferlegierungsrohr hergestellt werden, der im Vergleich zu den eingesetzten Kupferrohren eine höhere Verschleißbeständigkeit besitzt.

Die Erfindung wird nachfolgend an einem Ausführungsbeispiel näher erläutert.

In der zugehörigen Zeichnung zeigen:
Fig. 1 die Gießform mit einer Erdwärmesonde als Querschnittsdarstellung und
Fig. 2 die Einzelheit "Z" gemäß Fig. 1 in vergrößerter Darstellung.

Ausgehend von den technischen Anforderungen des Montagebetriebes für Erdsonden werden zwei PE-ummantelte Kupferrohre, z.B. mit einem Außendurchmesser von 16 mm und einer Wanddicke von 0,5 mm, in der gewünschten Länge (z.B. 100 m) hergestellt und auf eine Trommel gewickelt.

Die freien Enden der Rohre werden ein Stück abgewickelt, z.B. 1 bis 2 m, und an ihren vorderen Enden in einer Länge von ca. 2 cm abisoliert, also vom PE-Mantel befreit.

Auf die beiden abisolierten Rohrenden wird ein vorgefertigtes U-bogenförmiges Rohrstück aus blankem Kupfer (Außendurchmesser 18 mm, Wanddicke 0,8 mm) aufgeschoben und verlötet. Dabei ist darauf zu achten, dass die Lötfuge mit einem Lot gefüllt wird, das hitzeund korrosionsbeständig gegenüber dem eingesetzten Wärmeträgermedium ist. Die Hitzebeständigkeit ist aufgrund der nachfolgenden Ummantelung erforderlich.

Der nachfolgende Ummantelungsvorgang kann durch Gießen, z.B. Spritzgießen, oder Pressen unter Verwendung einer entsprechenden Form erfolgen. Die Form bzw. deren Innenkontur ist an die Endform der herzustellenden Ummantelung angepasst.

Das U-förmige Bogenstück mit den angelöteten Rohrenden wird dann so in die Form bzw. das Werkzeug eingelegt, dass die beiden Fügestellen und die angrenzenden Ummantelungsabschnitte der beiden Kupferrohrleitungen im Formhohlraum liegen. Der Überstand beträgt ca. 3 cm. Anschließend wird die in einer Plastziereinheit aufbereitete PE-Schmelze in die Form gegossen. Während des Formfüllvorganges werden das U-förmige Bogenstück und die angrenzende Umhüllung eingebettet. Nach dem Abkühlen und Erstarren der Schmelze wird die Form geöffnet und die fertige Erdwärmesonde entformt. Vor dem Formgebungsvorgang wird die Form bzw. das Werkzeug auf die erforderliche Einspritztemperatur erwärmt.

Der zwischenzeitlich abgewickelte Abschnitt der Kupferrohre wird wieder auf die Trommel aufgewickelt und die nunmehr fertige Erdwärmesonde für den Versand vorbereitet.

Eine erfindungsgemäß hergestellte Erdwärmesonde besteht aus einem ersten Rohr als Zufuhrleitung 6 und einem zweiten Rohr 8 als abführende Leitung.

Die beiden Kupferrohre 6 und 8 sind mit einer Kunststoffummantelung 7 ausgerüstet.

In den beiden Leitungen 6, 8, die miteinander über ein U-förmiges Rohrstück 3 verbunden sind, zirkuliert ein Wärmeträgermedium. Die Enden der beiden Kupferrohrleitungen 6, 8 sind abisoliert. Ein Stück der PE-Ummantelung 6 wurde entfernt.

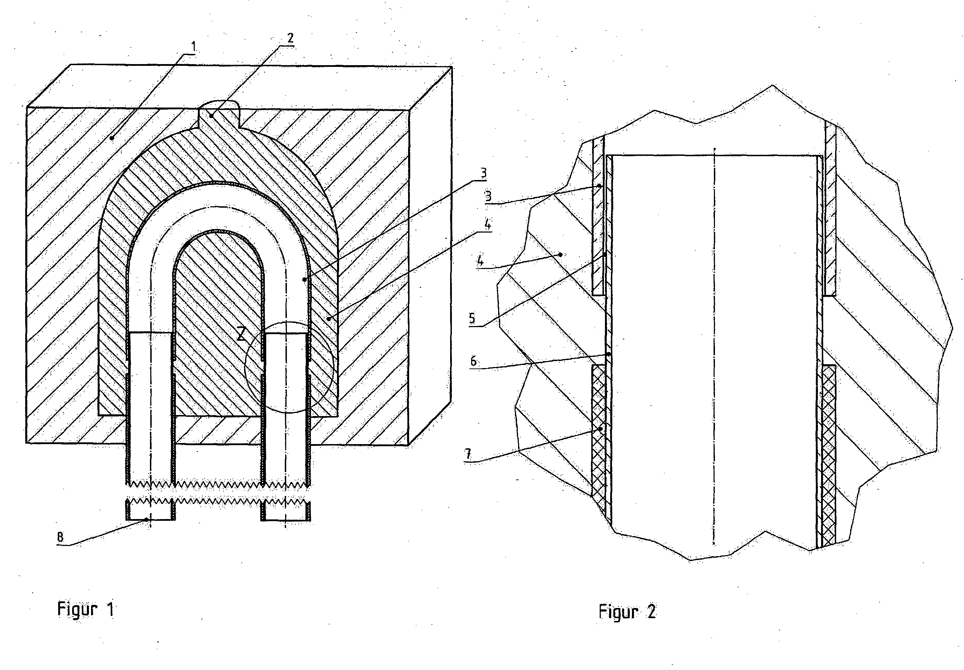

Die Kupferrohrleitungen 6, 8 sind hinsichtlich Wanddicke und Durchmesser deutlich kleiner als Wanddicke und Durchmesser des U-förmigen Rohrstücks 3, wie in Fig. 2 deutlich zu sehen.

Die Enden der Kupferrohrleitungen 6, 8 sind in die zugehörigen Abschnitte des Rohrstückes 3 eingesetzt und durch Lötverbindungen 5 mit diesen druckdicht verbunden. Zwischen der Stirnseite der Ummantelung 7 und der Stirnseite der beiden Abschnitte des U-förmigen Rohrstücks 3 verbleibt ein kleiner Freiraum, sodass die eingegossenen PE-Schmelze bis unmittelbar an die Rohrwandungen der Kupferrohrleitungen 6, 8 gelangt. Nach dem Einlegen des U-förmigen Rohrstückes 3 mit den Enden der beiden Rohrleitungen 6, 8 wird die Gießform 1 mit PE-Schmelze gefüllt, die über die Einfüllöffnung 2 zugeführt wird.

Durch den Gießvorgang wird eine Kunststoffumhüllung 4 als U-förmig gestalteter Formkörper aus PE gebildet. In diesem ist das U-förmige Rohrstück 3 mit den angrenzenden Abschnitten der Rohrleitungen 6, 8 vollständig eingebettet, einschließlich eines Stücks der PE-Ummantelung 7. Aufgrund der Werkstoffidentität (PE) erfolgt beim Inkontaktbringen der heißen PE-Schmelze mit der PE-Ummantelung ein Anschmelzen der PE-Ummantelung und dadurch eine stabile und dichte stoffschlüssige Verbindung.

In an sich üblicher Weise kann der PE-Formkörper noch Lochbohrungen für ein Absenkgewicht oder ein zentrisches Loch zur Aufnahme einer Führungsstange haben.

## Patentansprüche

1. Verfahren zur Herstellung von U-förmigen Erdwärmesonden, die direkt als Verdampfer an eine Wärmepumpe anschließbar sind, mit folgenden Verfahrensschritten:
a) zwei kunststoffummantelte Kupferrohre in entsprechend vorgegebener Montagelänge werden synchron auf eine Trommel aufgewickelt,
b) danach werden die beiden freien Enden abisoliert, sodass zwei blanke Kupferrohrendabschnitte vorliegen,
c) ein separat hergestelltes U-förmiges Rohrstück aus blankem Kupfer mit einer um mindestens 20 % größeren Wanddicke und einem um mindestens 10 % größeren Außendurchmesser wird auf die beiden blanken Kupferrohrendabschnitte geschoben, fixiert und druckdicht mit den Kupferrohrendabschnitten verbunden,
d) der nach Verfahrensschritt c) erhaltene U-förmige Rohrsondenabschnitt wird in ein mehrteiliges Formwerkzeug eingelegt und derart positioniert, dass der kunststoffummantelte Abschnitt an den beiden Rohrenden mit in den Formhohlraum des Werkzeuges ragt, mit einem Überstand, der mindestens dem Rohraußendurchmesser entspricht,
e) nachfolgend in das Formwerkzeug eine Kunststoffschmelze eingetragen oder eingespritzt und der U-förmige Rohrsondenabschnitt vollständig umhüllt wird, wobei zwischen den in den Formhohlraum ragenden kunststoffummantelten Rohrabschnitten und der zugeführten Schmelze eine stoffschlüssige Verbindung hergestellt wird, und
f) nach erfolgter Abkühlung das Formwerkzeug geöffnet, die ummantelte Erdwärmesonde entformt und das restliche Ende wieder auf die Trommel aufgewickelt wird.

2. Verfahren nach Anspruch 1, **dadurch gekennzeichnet, dass** die in das Formwerkzeug eingetragene Schmelze aus dem gleichen Kunststoffmaterial wie die Ummantelung des Kupferrohres besteht.

3. Verfahren nach einem der Ansprüche 1 oder 2, **dadurch gekennzeichnet, dass** die Wanddicke des ummantelten Kupferrohres in Abhängigkeit vom auftretenden Rohrinnendruck bestimmt wird.

4. Verfahren nach einem der Ansprüche 1 bis 3, **dadurch gekennzeichnet, dass** die Umhüllung des Rohrsondenabschnittes so ausgeführt wird, dass ein massiver Kunststoffblock gebildet wird.

5. Verfahren nach einem der Ansprüche 1 bis 4, **dadurch gekennzeichnet, dass** Verbindungen zwischen dem U-förmigen Formstück aus blankem Kupfer und den blanken Kupferrohrendabschnitten durch Schweißen, Löten oder Crimpen vorgenommen werden.

6. Verfahren nach einem der Ansprüche 1 bis 5, **dadurch gekennzeichnet, dass** die Kunststoffummantelung auf dem Medium abführenden Kupferrohr einen höheren Wärmewiderstand als die Kunststoffummantelung auf dem Medium zuführenden Kupferrohr aufweist.

7. Verfahren nach einem der Ansprüche 1 bis 6, **dadurch gekennzeichnet, dass** das U-förmige Formstück aus einer Kupferlegierungsrohr hergestellt wird, das im Vergleich zu den eingesetzten Kupferrohren eine höhere Verschleißbeständigkeit besitzt.

## Claims

1. Method for the manufacture of U-shaped geothermal energy probes which can be connected directly as evaporators to a heat pump, comprising the following process steps:
a) two plastic-coated copper tubes of specified installation length are synchronously wound on to a drum,
b) the two free ends are then stripped to form two bare copper tube end sections,
c) a separately manufactured U-shaped tube section made of bare copper with a wall thickness at least 20% greater and an external diameter at least 10% greater is pushed on to the two bare copper tube end sections, secured and connected in a pressure tight manner to the copper tube end sections,
d) the U-shaped tube probe section produced after carrying out process step c) is loaded into a multipart casting mold and positioned in such a way that the plastic-coated section on the two tube ends projects into the mold cavity of the tool, with a projecting length at least matching the external diameter of the tube,
e) a plastic melt is subsequently fed or injected into the casting mold and the U-shaped tube probe section is completely enclosed, with a cohesive connection made between the plastic-coated tube sections projecting into the mold cavity and the melt fed in, and
f) the casting mold is opened after cooling, the coated geothermal energy probe is removed from the mold and the remaining end rewound on to the drum.

2. Method according to claim 1, **characterized in that** the melt fed into the casting mold consists of the same plastic material as the coating of the copper tube.

3. Method according to one of the claims 1 or 2, **characterized in that** the wall thickness of the coated copper tube is determined according to the tube internal pressure arising.

4. Method according to one of the claims1 to 3, **characterized in that** the casing of the tube probe section is constructed in such a way that a solid plastic block is formed.

5. Method according to one of the claims 1 to 4, **characterized in that** connections between the U-shaped formed part made of bare copper and the bare copper tube end sections are made by welding, soldering or crimping.

6. Method according to one of the claims1 to 5, **characterized in that** the plastic coating on the copper tube removing the medium has a higher thermal resistance than the plastic coating on the copper tube supplying the medium.

7. Method according to one of the claims1 to 6, **characterized in that** the U-shaped formed part is manufactured from a copper alloy tube that has a higher wear resistance than the copper tubes used.

## Revendications

1. Procédé pour la fabrication de sondes à chaleur géothermique en forme de U pouvant être directement reliées en tant qu'évaporateur à une pompe à chaleur, présentant les étapes de procédé suivantes :
a) deux tubes de cuivre à gaine en plastique se présentant dans des longueurs de montage prédéfinies en conséquence sont enroulés de manière synchrone sur un cylindre,
b) ensuite les deux extrémités libres sont dénudées de sorte à obtenir deux tronçons d'extrémité de tube de cuivre nu,
c) un morceau de tube en forme de U fabriqué séparément à partir de cuivre nu et présentant une épaisseur d'au moins 20 % de plus et un diamètre extérieur d'au moins 10 % de plus est emmanché sur les deux tronçons d'extrémité de tube de cuivre nu, y est fixé et relié aux tronçons d'extrémité de tube de cuivre de sorte à être étanche à la pression,
d) le tronçon de sonde en tube en forme de U obtenu d'après l'étape de procédé c) est mis dans un outil de formage en plusieurs pièces et positionné de sorte que le tronçon à gaine en plastique émerge aux deux extrémités de tube à l'intérieur de la cavité de formage de l'outil en formant une saillie correspondant au moins au diamètre extérieur du tube,
e) du plastique fondu est ensuite introduit ou injecté à l'intérieur de l'outil de formage et le tronçon de sonde en tube en forme de U est entièrement gainé, l'adhésion entre les tronçons de tube à gaine en plastique émergeant à l'intérieur de la cavité de formage et le plastique fondu ajouté se faisant grâce aux propriétés des matières, et
f) une fois refroidi, l'outil de formage est ouvert, la sonde à chaleur géothermique gainée en est extraite et l'extrémité restante est de nouveau enroulée autour du cylindre.

2. Procédé selon la revendication 1, **caractérisé en ce que** le plastique fondu introduit dans l'outil de formage se compose de la même matière plastique que la gaine du tube de cuivre.

3. Procédé selon l'une quelconque des revendications 1 ou 2, **caractérisé en ce que** l'épaisseur du tube de cuivre gainé est déterminée en fonction de la pression régnant à l'intérieur du tube.

4. Procédé selon l'une quelconque des revendications 1 à 3, **caractérisé en ce que** la gaine du tronçon de sonde en tube est réalisée de sorte à former un bloc de plastique massif.

5. Procédé selon l'une quelconque des revendications 1 à 4, **caractérisé en ce que** la pièce façonnée en forme de U composée de cuivre nu est assemblée aux tronçons d'extrémité de tube de cuivre nu par soudure, brasage ou sertissage.

6. Procédé selon l'une quelconque des revendications 1 à 5, **caractérisé en ce que** la gaine en plastique du tube de cuivre évacuant le fluide présente une résistance à la chaleur plus élevée que la gaine en plastique du tube de cuivre amenant le fluide.

7. Procédé selon l'une quelconque des revendications 1 à 6, **caractérisé en ce que** la pièce façonnée en forme de U est fabriquée à partir d'un tube d'alliage de cuivre possédant une résistance à l'usure plus élevée comparée à celle des tubes de cuivre mis en oeuvre.
